# EUROPEAN PATENT APPLICATION

(11) **EP 4 779 142 A1**
(43) Date of publication of application: **22.07.2026**
(21) Application number: 24900351.8
(22) Date of filing: 06.11.2024
(51) Int. Cl.: F02D 19/08

(54) **CONTROL DEVICE OF INTERNAL COMBUSTION ENGINE**

(30) Priority: 07.12.2023 JP 2023207065
(71) Applicant: MITSUBISHI HEAVY INDUSTRIES ENGINE & TURBOCHARGER, LTD., Sagamihara-shi, Kanagawa 252-5293 (JP)
(72) Inventor: TANAKA, Takafumi, Sagamihara-shi, Kanagawa 252-5293 (JP); KOGURE, Ryosuke, Sagamihara-shi, Kanagawa 252-5293 (JP); KAKIZAKAI, Takehiko, Sagamihara-shi, Kanagawa 252-5293 (JP); IMAMORI, Yusuke, Tokyo 100-8332 (JP); UEDA, Hiroyuki, Tokyo 100-8332 (JP); TAKAHASHI, Tomohiro, Tokyo 100-8332 (JP)
(74) Representative: Hoffmann Eitle
(86) International application number: PCT/JP2024/039345
(87) International publication number: WO 2025/121056

(57) **Abstract**

Provided is a control device of an internal combustion engine capable of performing a co-combustion operation using both a liquid fuel and a gaseous fuel as the fuels to be used. The internal combustion engine includes: a cylinder having a combustion chamber for burning the fuels to be used; an injector for injecting the liquid fuel into the combustion chamber; a liquid fuel introduction line for guiding the liquid fuel to the injector; and a gaseous fuel introduction line for guiding the gaseous fuel to the combustion chamber. The control device of the internal combustion engine includes a recovery measure execution part configured to perform a recovery measure for recovering an actual injection amount of the liquid fuel injected from the injector when a reduction amount of output of the internal combustion engine, or the discrepancy between the actual injection amount of the liquid fuel from the injector and an instructed injection amount, exceeds a predetermined threshold in a state in which the internal combustion engine is operated by the co-combustion operation.

## Description

### Technical Field

The present disclosure relates to a control device of an internal combustion engine.

The present application claims priority based on Japanese Patent Application No. 2023-207065 filed in Japan on December 7, 2023, the contents of which are incorporated herein by reference.

### Background Art

It is known that there is an internal combustion engine capable of performing a mixed combustion operation using a gaseous fuel and a liquid fuel as a fuel to be used(for example, PTL 1).

### Citation List

### Patent Literature

[PTL 1] Japanese Unexamined Patent Application Publication No. 2011-226741

### Summary of Invention

### Technical Problem

In an internal combustion engine capable of performing a mixed combustion operation, when a relatively low-combustibility gaseous fuel is used, a liquid fuel as an ignition source is required. In recent years, in order to reduce environmental load, decarbonized fuel such as ammonia gas or methanol gas is sometimes used as a gaseous fuel. When a decarbonized fuel is used as a gaseous fuel, the ratio of the decarbonized fuel (gaseous fuel) in the fuel to be used may be increased as much as possible. However, fuel clogging may occur in an injector that injects the liquid fuel, which may lead to a decrease in the output of the internal combustion engine.

In view of the above circumstances, an object of at least one embodiment of the present disclosure is to provide a control device of an internal combustion engine that can suppress fuel clogging in an internal combustion engine in which mixed combustion operation is possible.

### Solution to Problem

According to at least one embodiment of the present disclosure, there is provided a control device of an internal combustion engine that is capable of performing mixed combustion operation using both liquid fuel and gaseous fuel as a fuel to be used and that includes a cylinder having a combustion chamber for combusting the fuel to be used, an injector for injecting the liquid fuel into the combustion chamber, a liquid fuel introduction line for guiding the liquid fuel to the injector, and a gaseous fuel introduction line for guiding the gaseous fuel to the combustion chamber, the control device including: a recovery measure execution unit configured to perform a recovery measure for recovering an actual injection amount of the liquid fuel injected from the injector in a case where, in a state where the internal combustion engine is operated by the mixed combustion operation, an output decrease amount of the internal combustion engine or a deviation of the actual injection amount of the liquid fuel from the injector relative to an instruction injection amount exceeds a predetermined threshold value.

### Advantageous Effects of Invention

According to at least one embodiment of the present disclosure, there is provided a control device of an internal combustion engine that can suppress fuel clogging in an internal combustion engine in which mixed combustion operation is possible.

### Brief Description of Drawings

FIG. 1 is a schematic diagram of an internal combustion engine system including a control device of an internal combustion engine according to an embodiment of the present disclosure.
FIG. 2 is a schematic diagram of an internal combustion engine system including a control device of an internal combustion engine according to an embodiment of the present disclosure.
FIG. 3 is a control flow diagram of the internal combustion engine according to the embodiment of the present disclosure.
FIG. 4 is a control flow diagram of the internal combustion engine according to the embodiment of the present disclosure.
FIG. 5 is a control flow diagram of the internal combustion engine according to the embodiment of the present disclosure.
FIG. 6 is an explanatory diagram for describing recovery measures of an injector in the embodiment of the present disclosure.
FIG. 7 is an explanatory diagram for describing recovery measures of an injector in the embodiment of the present disclosure.

### Description of Embodiments

Hereinafter, some embodiments of the present disclosure will be described with reference to the accompanying drawings. Dimensions, materials, shapes, relative disposition, and the like of components described as embodiments or illustrated in the drawings are not intended to limit the scope of the present disclosure, but are merely explanatory examples.

### (Internal Combustion Engine System)

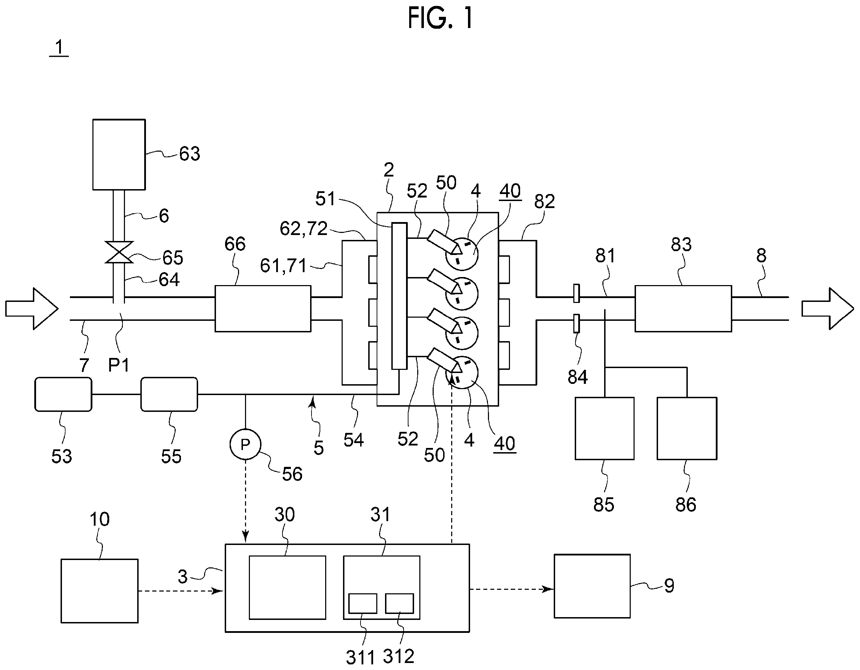

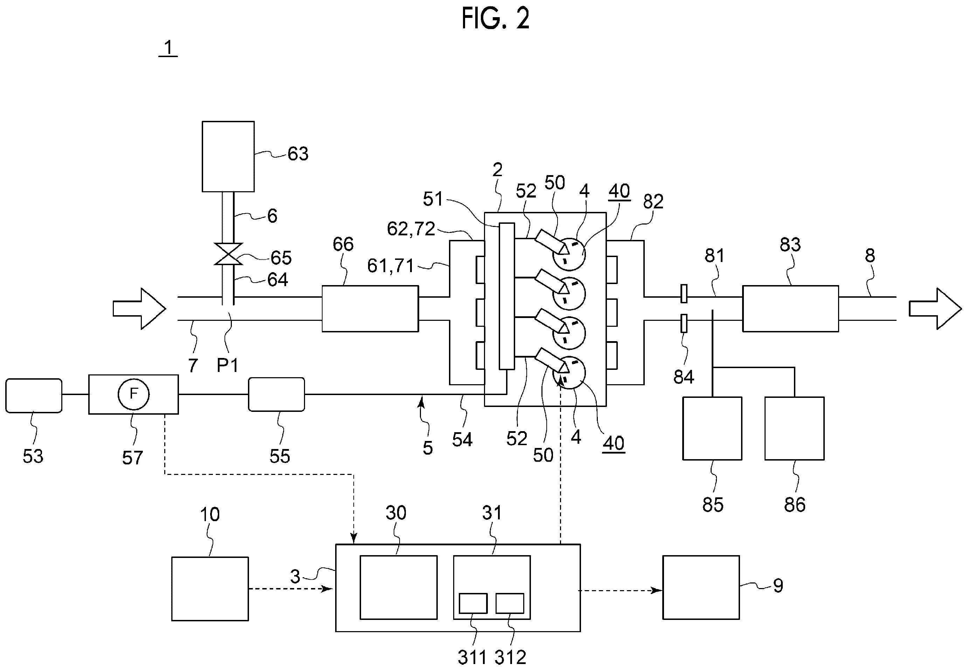

FIGS. 1 and 2 are schematic diagrams of an internal combustion engine system 1 including a control device 3 of an internal combustion engine 2 according to an embodiment of the present disclosure. As shown in FIGS. 1 and 2, the internal combustion engine system 1 includes the internal combustion engine (engine) 2 configured to generate power by combusting a usage fuel inside the internal combustion engine 2, and the control device 3 configured to perform operation control and combustion control of the internal combustion engine 2. In the following embodiment, a case where the internal combustion engine 2 is a four-stroke engine will be described. However, some embodiments of the present disclosure are also applicable to a case where the internal combustion engine 2 is a two-stroke engine.

### (Internal Combustion Engine)

As shown in FIGS. 1 and 2, the internal combustion engine 2 includes at least one (in the illustrated example, a plurality of) cylinders 4. Each of the plurality of cylinders 4 includes a combustion chamber 40 for combusting the fuel to be used. Although not shown, the combustion chamber 40 is formed between a cylinder body and a piston accommodated inside the cylinder body. The internal combustion engine 2 is configured to combust a fuel to be used and a combustion gas (for example, air) in each of the combustion chambers 40 of the plurality of cylinders 4.

The internal combustion engine 2 is configured to perform a dedicated combustion operation using a liquid fuel as a fuel to be used and a mixed combustion operation using both the liquid fuel and a gaseous fuel as a fuel.

In some embodiments, the above-described liquid fuel is diesel fuel, and the above-described gaseous fuel has a methane number lower than that of the diesel fuel. In a certain embodiment, the internal combustion engine 2 is a diesel engine. In order to suppress the emission of greenhouse gases such as carbon dioxide from the internal combustion engine 2, the ratio of the gaseous fuel in the fuel to be used is increased and the ratio of the liquid fuel is decreased. As a result, the flow rate of the liquid fuel injected from the injector 50 is reduced, and there is a concern that fuel may be clogged in the injector 50. In addition, in a case where the methane number of the gaseous fuel is lower than that of the liquid fuel, it is necessary to relatively lower the air excess ratio in order to combust the gaseous fuel and to raise the temperature in the cylinder. When the temperature in the cylinder is raised, the heat received by the injector 50 becomes excessive, and there is a concern that fuel may be clogged in the injector 50. Since there is a high possibility that fuel clogging occurs in the injector 50 in this way, it is necessary to take recovery measures to achieve early elimination of fuel clogging in the injector 50.

In some other embodiments, the liquid fuel described above may be a fuel oil other than diesel fuel, for example, a renewable fuel oil such as bioethanol.

In some embodiments, the above-described gaseous fuel is ammonia gas. Since the ammonia gas is a gaseous fuel having relatively low combustibility, it is necessary to use a liquid fuel as an ignition source. In addition, it is also necessary to raise the temperature in the cylinder by relatively lowering the air excess ratio in order to combust a gaseous fuel having relatively low combustibility. In some other embodiments, the gaseous fuel described above may be a gaseous fuel other than the ammonia gas, for example, hydrogen gas, methanol gas, or the like.

As shown in FIGS. 1 and 2, the internal combustion engine 2 includes a plurality of injectors 50 for respectively injecting a liquid fuel into each of the combustion chambers 40 of the plurality of cylinders 4, a liquid fuel introduction line 5 for guiding the liquid fuel to the injector 50, and a gaseous fuel introduction line 6 for guiding a gaseous fuel to each of the plurality of combustion chambers 40. The injector 50 is individually provided for each cylinder 4. Each of the plurality of injectors 50 includes a fuel injection valve configured to inject a liquid fuel into the corresponding combustion chamber 40.

In the illustrated embodiment, the internal combustion engine 2 further includes a combustion gas introduction line 7 for guiding a combustion gas to each of the plurality of combustion chambers 40, and an exhaust gas discharge line 8 for discharging the exhaust gas from each of the plurality of combustion chambers 40, as shown in FIGS. 1 and 2.

### (Liquid Fuel Introduction Line)

The liquid fuel introduction line 5 forms a flow path for supplying the liquid fuel to each of the plurality of injectors 50, and is not limited to a pipe. In the illustrated embodiment, as shown in FIGS. 1 and 2, the liquid fuel introduction line 5 includes a common rail 51 capable of storing the liquid fuel, a plurality of branch pipes 52 for introducing the liquid fuel from the common rail 51 into each of the plurality of injectors 50, a liquid fuel pipe 54 for guiding the liquid fuel from a liquid fuel supply source (for example, a storage tank storing the liquid fuel) 53 to the common rail 51, and a pressure increasing device (for example, a pressure increasing pump) 55 for increasing a pressure of the liquid fuel guided to the common rail 51.

Each of the plurality of branch pipes 52 has one end connected to the common rail 51 and the other end connected to the injector 50 corresponding to the branch pipe 52. One end of the liquid fuel pipe 54 is connected to the common rail 51, and the other end is connected to the supply source 53 of the liquid fuel. The pressure increasing device 55 is provided in the liquid fuel pipe 54.

As shown in FIG. 1, the internal combustion engine 2 may include a pressure acquisition device (in the illustrated example, a pressure sensor) 56 configured to acquire the pressure of the liquid fuel guided to the common rail 51. In the illustrated embodiment, the pressure acquisition device 56 is disposed on the downstream side (common rail 51 side) of the pressure increasing device 55 in the liquid fuel pipe 54, and acquires the pressure of the liquid fuel flowing on the downstream side of the pressure increasing device 55 in the liquid fuel pipe 54.

As shown in FIG. 2, the internal combustion engine 2 may include a flow rate acquisition device (in the illustrated example, a flow rate sensor) 57 configured to acquire the flow rate of the liquid fuel guided to the common rail 51. In the illustrated embodiment, the flow rate acquisition device 57 is disposed on the upstream side (supply source 53 side) of the pressure increasing device 55 in the liquid fuel pipe 54 and is configured to acquire the flow rate of the liquid fuel flowing on the upstream side of the pressure increasing device 55 in the liquid fuel pipe 54. The flow rate acquisition device 57 may be disposed on the downstream side (common rail 51 side) of the pressure increasing device 55 in the liquid fuel pipe 54 and may acquire the flow rate of the liquid fuel flowing on the downstream side of the pressure increasing device 55 in the liquid fuel pipe 54.

### (Gaseous Fuel Introduction Line)

The gaseous fuel introduction line 6 forms a flow path for supplying the gaseous fuel to each of the plurality of combustion chambers 40, and is not limited to a pipe. In the illustrated embodiment, the gaseous fuel introduction line 6 includes a gaseous fuel pipe 61 for guiding the gaseous fuel from a supply source (for example, a storage tank for storing the gaseous fuel) 63 of the gaseous fuel, and a plurality of branch pipes 62 for introducing the gaseous fuel into each of the plurality of combustion chambers 40 from the gaseous fuel pipe 61. One end of each of the plurality of branch pipes 62 is connected to the gaseous fuel pipe 61, and the other end is connected to the combustion chamber 40 corresponding to the branch pipe 62. The gaseous fuel supply source 63 may store the gaseous fuel in a gas state or may store the gaseous fuel in a liquid state.

### (Combustion Gas Introduction Line)

The combustion gas introduction line 7 forms a flow path for supplying the combustion gas to each of the plurality of combustion chambers 40, and is not limited to a pipe. In the illustrated embodiment, the combustion gas introduction line 7 includes a combustion gas pipe 71 for guiding the combustion gas from a supply source of the combustion gas, and a plurality of branch pipes 72 for introducing the combustion gas from the combustion gas pipe 71 into each of the plurality of combustion chambers 40. Each of the plurality of branch pipes 72 has one end connected to the combustion gas pipe 71 and the other end connected to the combustion chamber 40 corresponding to the branch pipe 72. One end (upstream end) of the combustion gas pipe 71 may be open to the atmosphere or may be connected to a storage tank that stores the combustion gas.

In the embodiment shown in FIGS. 1 and 2, the combustion gas introduction line 7 merges with the gaseous fuel introduction line 6 at the merging portion P1 provided in the gaseous fuel pipe 61, and shares the downstream side (combustion chamber 40 side) of the merging portion P1 with the gaseous fuel introduction line 6. That is, on the downstream side of the merging portion P1, the gaseous fuel pipe 61 also serves as the combustion gas pipe 71, and each of the plurality of branch pipes 62 also serves as a corresponding branch pipe 72. The gaseous fuel is guided to the combustion chamber 40 in a mixed gas state mixed with the combustion gas, and is combusted in the mixed gas state. In order to combust the gaseous fuel, it is necessary to relatively lower the air excess ratio and raise the temperature in the cylinder 4. When the temperature in the cylinder 4 is raised, the heat received by the injector 50 becomes excessive, and there is a concern that fuel may be clogged in the injector 50. Therefore, it is necessary to perform the recovery measure and to achieve early elimination of the fuel clogging in the injector 50.

In the embodiment shown in FIGS. 1 and 2, the gaseous fuel pipe 61 includes the upstream gaseous fuel pipe 64 in which one end is connected to the gaseous fuel supply source 63 and the other end is connected to the combustion gas pipe 71 at the merging portion P1.

As shown in FIGS. 1 and 2, the internal combustion engine 2 may further include a flow rate adjusting device (in the illustrated example, a flow rate adjusting valve) 65 configured to adjust the flow rate of the gaseous fuel guided to each of the plurality of combustion chambers 40. The flow rate adjusting device 65 may be provided in the gaseous fuel pipe 61 (in the illustrated example, the upstream gaseous fuel pipe 64) or may be provided in each of the plurality of branch pipes 62.

As shown in FIGS. 1 and 2, the internal combustion engine 2 may further include a mixer (in the illustrated example, a static mixer) 66 that continuously mixes the gaseous fuel and the combustion gas. In the illustrated embodiment, the mixer 66 is provided on the downstream side of the merging portion P1 of the gaseous fuel pipe 61.

### (Exhaust Gas Discharge Line)

The exhaust gas discharge line 8 forms a flow path for discharging the exhaust gas from each of the plurality of combustion chambers 40, and is not limited to a pipe. The illustrated embodiment includes the exhaust gas pipe 81 and a plurality of branch pipes 82 for discharging the exhaust gas from each of the plurality of combustion chambers 40 to the exhaust gas pipe 81. One end of each of the plurality of branch pipes 82 is connected to the exhaust gas pipe 81, and the other end is connected to the combustion chamber 40 corresponding to the branch pipe 82. One end (downstream end) of the exhaust gas pipe 81 may be connected to a chimney (not shown).

As shown in FIGS. 1 and 2, the internal combustion engine 2 may further include a diesel oxidation catalyst (DOC) 83 that is provided in an exhaust gas pipe 81 and that oxidizes hydrocarbons or carbon monoxide contained in the exhaust gas flowing through the exhaust gas pipe 81. In addition, as shown in FIGS. 1 and 2, the exhaust gas pipe 81 may be provided with an orifice 84 for generating back pressure.

As shown in FIGS. 1 and 2, the internal combustion engine 2 may further include an analyzer 85 that is provided in the exhaust gas pipe 81 and that acquires a concentration of nitrogen oxide contained in the exhaust gas flowing through the exhaust gas pipe 81, and an analyzer 86 that is provided in the exhaust gas pipe 81 and that acquires a concentration of ammonia gas or nitrous oxide contained in the exhaust gas flowing through the exhaust gas pipe 81.

### (Control Device of Internal Combustion Engine)

The control device 3 of the internal combustion engine 2 is an electronic control unit that controls the operation of each device included in the internal combustion engine 2, such as the injector 50, the pressure increasing device 55, and the flow rate adjusting device 65. The control device 3 may be configured as a microcomputer including a central processing unit (CPU) including a processor, a random-access memory (RAM), a read-only memory (ROM), an I/O interface, and the like. In the shown embodiment, the control device 3 includes an engine control unit. In some other embodiments, the control device 3 may be mounted as one of functions (programs or circuits) included in the engine control unit. In addition, in some other embodiments, the control device 3 may be configured as an electronic control unit different from the engine control unit.

The control device 3 of the internal combustion engine 2 includes a control unit 30 configured to perform operation control and combustion control of the internal combustion engine 2 according to an operation mode of the internal combustion engine 2. The internal combustion engine 2 may include a switching device (switch) 10 for manually switching the operation mode of the internal combustion engine 2. The control unit 30 is configured to perform the operation control or the combustion control of the internal combustion engine 2 according to the information (signal) related to the operation mode sent from the switching device 10. The control unit 30 is configured to close the flow rate adjusting device 65 and to control opening and closing of the injector 50 to cause the liquid fuel and the combustion gas to be combusted in the combustion chamber 40 in a case where the operation mode of the internal combustion engine 2 is the dedicated combustion operation. In addition, the control unit 30 is configured to open the flow rate adjusting device 65 and to perform the opening and closing control of the injector 50 in a case where the operation mode of the internal combustion engine 2 is the mixed combustion operation, so that the liquid fuel and the mixed gas obtained by mixing the gaseous fuel and the combustion gas are combusted in the combustion chamber 40.

The control unit 30 is configured to perform combustion control of the internal combustion engine 2 such that a ratio of the gaseous fuel in the fuel to be used is as large as possible in order to suppress the generation of greenhouse gases in a case where the operation mode of the internal combustion engine 2 is a dedicated combustion operation.

As shown in FIGS. 1 and 2, the control device 3 of the internal combustion engine 2 according to some embodiments includes a recovery measure execution unit 31. The recovery measure execution unit 31 is configured to monitor the output of the internal combustion engine 2 and is configured to calculate a decrease amount with respect to a steady output, which is the output of the internal combustion engine 2 in a case where the internal combustion engine 2 is in a steady operation by the mixed combustion operation. The recovery measure execution unit 31 is configured to perform a recovery measure for recovering the actual injection amount of the liquid fuel injected from the injector 50 in a case where the output decrease amount of the internal combustion engine 2 exceeds a predetermined threshold value in a state where the internal combustion engine 2 is operated by the mixed combustion operation.

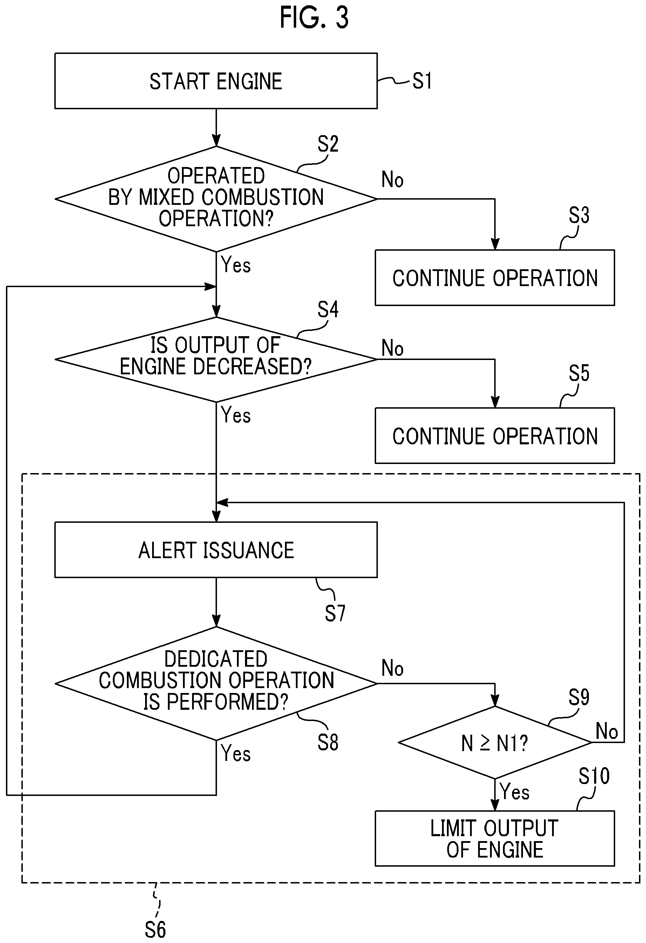

FIG. 3 is a control flow diagram of the internal combustion engine 2 according to the embodiment of the present disclosure. The control flow shown in FIG. 3 is performed by the recovery measure execution unit 31. When the internal combustion engine 2 is started (step S1) and the internal combustion engine 2 is in a state of being operated by the dedicated combustion operation described above (step S2: "No"), the determination of the output decrease amount (step S4) to be described later is not performed, and the dedicated combustion operation of the internal combustion engine 2 is continued (step S3).

When the internal combustion engine 2 is in a state of being operated by the mixed combustion operation (in step S2, "Yes"), the determination of the output decrease amount is performed (step S4). When the output decrease amount does not reach the predetermined threshold value (in step S4, "No"), it is assumed that the injector 50 is not clogged, and the mixed combustion operation of the internal combustion engine 2 is continued (step S5). When the output decrease amount exceeds a predetermined threshold value (in step S4, "Yes"), it is assumed that the injector 50 is clogged, and the recovery measure is performed (step S6).

In a case where the output decrease amount of the internal combustion engine 2 exceeds a predetermined threshold value, there is a high probability that fuel clogging has occurred in the injector 50. In this case, the recovery measure execution unit 31 performs the recovery measure for recovering the actual injection amount of the liquid fuel injected from the injector 50, so that the fuel clogging in the injector 50 can be eliminated at an early stage. As the recovery measure (step S6), a notification prompting a switch of the operation mode of the internal combustion engine 2 to the dedicated combustion operation using the liquid fuel as the fuel to be used is provided as shown in FIG. 3.

In the embodiment shown in FIG. 3, in a case where the amount of decrease in the output of the internal combustion engine 2 exceeds a predetermined threshold value (in step S4, "Yes"), a notification is given to prompt a switch of the operation mode of the internal combustion engine 2 to the dedicated combustion operation using the liquid fuel as the fuel to be used (step S7). The recovery measure execution unit 31 includes a notification instruction unit 311 (refer to FIGS. 1 and 2). The notification instruction unit 311 is configured to cause the notification device 9 to perform notification to prompt switching of the operation mode of the internal combustion engine 2 to the dedicated combustion operation using the liquid fuel as the fuel to be used in a case where the output decrease amount of the internal combustion engine 2 exceeds a predetermined threshold value (in step S4, "Yes"). The notification device 9 receives the notification instruction from the notification instruction unit 311 and performs the notification. The notification device 9 may be a display device (display) that outputs the notification as an image, or may be an acoustic device (speaker) that outputs the notification as a sound.

The notification device 9 can perform, in accordance with the instruction from the notification instruction unit 311, the notification to the user of the internal combustion engine 2 to prompt switching to the dedicated combustion operation. A user of the internal combustion engine 2 that has received the notification can switch the operation mode of the internal combustion engine 2 to the dedicated combustion operation by operating the switching device 10 at a desired time. The operation mode of the internal combustion engine 2 is switched to the dedicated combustion operation, so that the injection amount of the liquid fuel in the injector 50 can be increased. By increasing the injection amount of the liquid fuel in the injector 50, the fuel clogging in the injector 50 can be directly eliminated.

In the embodiment shown in FIG. 3, in a case where an operation of switching to the dedicated combustion operation is performed after the notification (step S8: "Yes"), the determination of the output decrease amount (step S4) is performed again in order to check whether or not the clogging of the injector 50 is eliminated by the dedicated combustion operation.

In the embodiment shown in FIG. 3, in a case where an operation of switching to the dedicated combustion operation is not performed after the notification, the notification by the notification device 9 is performed again. The notification by the notification device 9 may be performed at regular intervals. As illustrated in FIG. 3, in a state where the operation mode of the internal combustion engine 2 is maintained in the mixed combustion operation (in step S8, "No") without performing the operation of switching to the dedicated combustion operation, in a case where the notification (notification count N) by the notification device 9 is performed a predetermined number of times N1 or more (in step S9, "Yes"), the output of the internal combustion engine 2 may be forcibly limited to prompt the operation. It is preferable that the predetermined number of times N1 is a plurality of times of two or more times. The recovery measure execution unit 31 includes a notification instruction unit 311 and an output limit unit 312 (refer to FIGS. 1 and 2). The output limit unit 312 is configured to limit the output of the internal combustion engine 2 to a predetermined output or less (for example, 50% or less of the steady output) in a case where the notification (notification count N) by the notification device 9 is performed a predetermined number of times N1 or more (in step S9 of FIG. 3, "Yes") (step S10). By limiting the output of the internal combustion engine 2 to the predetermined output or less by the output limit unit 312, the user of the internal combustion engine 2 can be strongly prompted to switch to the dedicated combustion operation.

In some embodiments, the recovery measure execution unit 31 described above is configured to acquire the actual injection amount of the liquid fuel in the injector 50 and to calculate the deviation of the actual injection amount of the liquid fuel in the injector 50 from the instruction injection amount. The recovery measure execution unit 31 is configured to perform a recovery measure for recovering the actual injection amount of the liquid fuel injected from the injector 50 in a case where the above-described deviation exceeds a predetermined threshold value in a state where the internal combustion engine 2 is operated by the mixed combustion operation.

In the embodiment shown in FIG. 1, the recovery measure execution unit 31 is configured to monitor the pressure of the liquid fuel acquired by the pressure acquisition device 56. The recovery measure execution unit 31 is configured to acquire the actual injection amount of the liquid fuel in the injector 50 from the change amount (decrease amount) of the pressure of the liquid fuel acquired by the pressure acquisition device 56, based on the association information in which the change amount of the pressure of the liquid fuel acquired by the pressure acquisition device 56 and the actual injection amount of the liquid fuel in the injector 50 are associated with each other.

In the embodiment shown in FIG. 2, the recovery measure execution unit 31 is configured to monitor the flow rate of the liquid fuel acquired by the flow rate acquisition device 57. The recovery measure execution unit 31 is configured to acquire the actual injection amount of the liquid fuel in the injector 50 from the change amount (increase amount) of the flow rate of the liquid fuel acquired by the flow rate acquisition device 57, based on the association information in which the change amount of the flow rate of the liquid fuel acquired by the flow rate acquisition device 57 and the actual injection amount of the liquid fuel in the injector 50 are associated with each other.

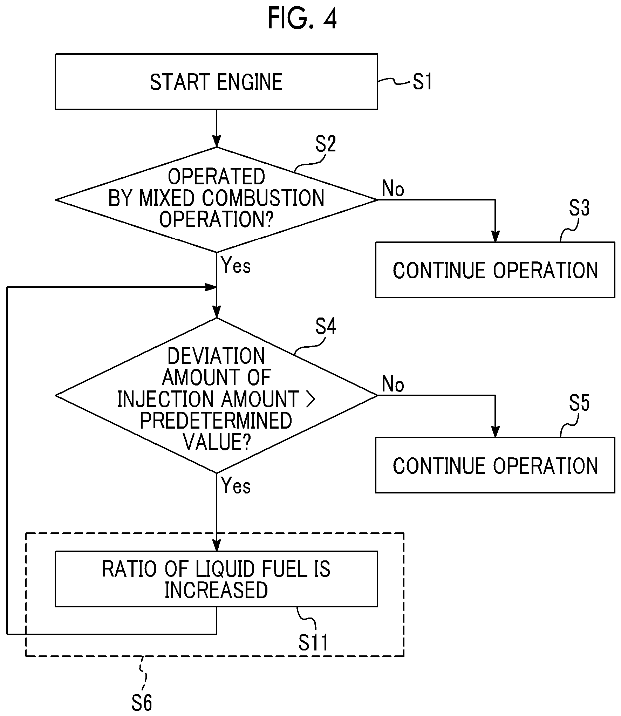

FIG. 4 is a control flow diagram of the internal combustion engine 2 according to the embodiment of the present disclosure. The control flow shown in FIG. 4 is performed by the recovery measure execution unit 31. When the internal combustion engine 2 is started (step S1) and the internal combustion engine 2 is in a state of being operated by the dedicated combustion operation described above (step S2: "No"), the determination of the separation amount (step S4) described later is not performed, and the dedicated combustion operation of the internal combustion engine 2 is continued (step S3). In a state where the internal combustion engine 2 is operated by the mixed combustion operation described above ("Yes" in step S2), the determination of the deviation amount of the actual injection amount of the liquid fuel with respect to the instruction injection amount (step S4) is performed. When the separation amount does not reach the predetermined threshold value (in step S4, "No"), it is assumed that the injector 50 is not clogged, and the mixed combustion operation of the internal combustion engine 2 is continued (step S5). When the separation amount exceeds a predetermined threshold value (in step S4, "Yes"), it is assumed that the injector 50 is clogged, and the recovery measure is performed (step S6).

Fuel clogging in the injector 50 causes a deviation of the actual injection amount of the liquid fuel in the injector 50 from the instruction injection amount. The above-described deviation is directly involved in the fuel clogging in the injector 50, as compared to a decrease in the output of the internal combustion engine 2 caused by various factors. In a case where the deviation amount exceeds a predetermined threshold value, there is a high probability that fuel clogging has occurred in the injector 50. In this case, the recovery measure execution unit 31 performs the recovery measure for recovering the actual injection amount of the liquid fuel injected from the injector 50, so that the fuel clogging in the injector 50 can be eliminated at an early stage. As the recovery measure (step S6), increasing the ratio of the liquid fuel in the fuel to be used as shown in FIG. 4 can be given as an example.

In the embodiment shown in FIG. 4, when the deviation amount of the actual injection amount of the liquid fuel from the instruction injection amount exceeds the predetermined threshold value (in step S4, "Yes"), the ratio of the liquid fuel in the fuel to be used is increased (step S11). The recovery measure execution unit 31 is configured to increase the ratio of the liquid fuel in the fue to be used in a case where the above-described deviation amount exceeds a predetermined threshold value ("Yes" in step S4). In a certain embodiment, the recovery measure execution unit 31 described above is configured to make the ratio of the liquid fuel in the fuel to be used 80% or more as the recovery measure described above. By increasing the ratio of the liquid fuel in the fuel to be used, the injection amount of the liquid fuel in the injector 50 can be increased. By increasing the injection amount of the liquid fuel in the injector 50, the fuel clogging in the injector 50 can be directly eliminated.

In Step S11 described above, the operation mode of the internal combustion engine 2 may be switched to the dedicated combustion operation in which the liquid fuel is used as the fuel to be used for the purpose of increasing the ratio of the liquid fuel in the fuel. In some embodiments, the recovery measure execution unit 31 described above is configured to switch the operation mode of the internal combustion engine 2 to a dedicated combustion operation using the liquid fuel as the fuel to be used in order to increase the ratio of the liquid fuel in the fuel.

By switching the operation mode of the internal combustion engine 2 to the dedicated combustion operation, the injection amount of the liquid fuel in the injector 50 can be increased. By increasing the injection amount of the liquid fuel in the injector 50, the fuel clogging in the injector 50 can be directly eliminated.

The determination of whether or not the separation amount exceeds a predetermined threshold value may be performed for each cylinder 4, and the recovery measure may be performed for the cylinder 4 in which the deviation amount exceeds the predetermined threshold value. That is, the recovery measure may not be performed on the cylinder 4 in which the separation does not reach the predetermined threshold value.

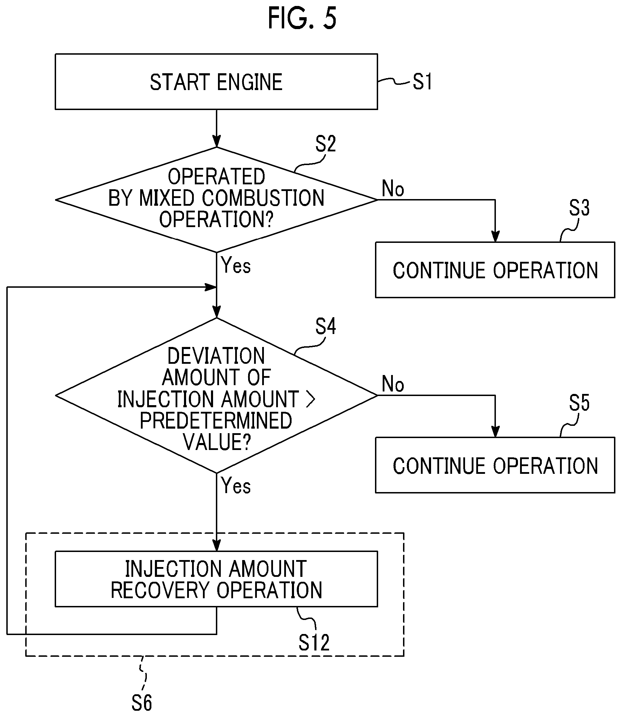

FIG. 5 is a control flow diagram of the internal combustion engine 2 according to the embodiment of the present disclosure. The control flow shown in FIG. 5 is performed by the recovery measure execution unit 31. In the embodiment shown in FIG. 5, when the deviation amount of the actual injection amount of the liquid fuel from the instruction injection amount exceeds a predetermined threshold value (in step S4, "Yes"), the injection amount recovery operation is performed as the recovery measure described above (step S12). The recovery measure execution unit 31 is configured to execute the injection amount recovery operation in a case where the above-described deviation amount exceeds a predetermined threshold value ("Yes" in step S4).

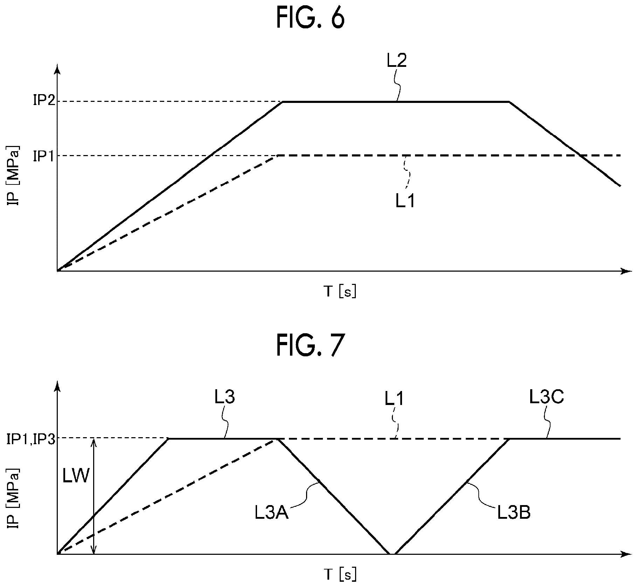

FIGS. 6 and 7 are explanatory diagrams for describing recovery measures of the injector 50 in the embodiment of the present disclosure. FIGS. 6 and 7 illustrate a graph in which time T is a horizontal axis and the injection pressure IP of the injector 50 is a vertical axis. L1 shown in FIGS. 6 and 7 shows a change in the injection pressure IP in a case where the operation mode of the internal combustion engine 2 is a dedicated combustion operation. L2 and L3 shown in FIGS. 6 and 7 indicate a change in the injection pressure IP during the injection amount recovery operation.

In some embodiments, the recovery measure execution unit 31 described above is configured to increase the injection pressure IP, which is the pressure of the liquid fuel injected from the injector 50, more than during the dedicated combustion operation, as the recovery measure (injection amount recovery operation) described above. As shown in FIG. 6, the maximum value IP2 of the injection pressure during the injection amount recovery operation is larger than the maximum value IP1 of the injection pressure during the dedicated combustion operation. The injection pressure, which is the pressure of the liquid fuel injected from the injector 50 in the injection amount recovery operation, is increased compared to the injection pressure in the dedicated combustion operation, so that the fuel clogging in the injector 50 can be directly eliminated.

In some embodiments, the recovery measure execution unit 31 described above is configured to cause the injection pressure, which is the pressure of the liquid fuel injected from the injector 50, to pulsate within a predetermined pulsation limit width LW as the recovery measure (injection amount recovery operation) described above. As shown in FIG. 7, in the injection amount recovery operation, the injection pressure IP is gradually decreased (L3A in FIG. 7) or the injection pressure IP is gradually increased (L3B in FIG. 7) within a predetermined pulsation limit width LW. In the injection amount recovery operation, there may be a period (L3C in FIG. 7) in which the injection pressure IP is kept constant. The maximum value IP3 of the injection pressure during the injection amount recovery operation may be the same as the maximum value IP1 of the injection pressure during the dedicated combustion operation, or may be larger than the maximum value IP1. By pulsating the injection pressure, which is the pressure of the liquid fuel injected from the injector 50, within the predetermined pulsation limit width LW during the injection recovery operation, the fuel clogging in the injector 50 can be directly eliminated.

In some of the above-described embodiments, the control flow shown in FIGS. 3 to 5 is performed by the recovery measure execution unit 31 of the control device 3. However, a part of the control flow may be performed by a portion other than the recovery measure execution unit 31 of the control device 3, a device other than the control device 3, or manually.

In the present specification, expressions representing relative or absolute dispositions such as "in a certain direction", "along a certain direction", "parallel", "orthogonal", "center", "concentric", or "coaxial" are intended not only to strictly represent such dispositions but also to encompass states in which, within tolerances or to an extent that the same function can be obtained, there is relative displacement in angle or distance.

For example, expressions such as "identical", "equal", and "homogeneous", which indicate that things are in the same state, not only represent a state of being strictly equal, but also represent a state in which there is a tolerance, or a difference to the extent that the same function can be obtained.

In addition, in the present specification, an expression of a shape such as a rectangular shape and a cylindrical shape indicates not only the shape such as the rectangular shape and the cylindrical shape in a geometrically strict sense, but also a shape including an uneven portion or a chamfered portion within the range in which the same effect can be achieved.

Moreover, in the present specification, expressions such as that one component "comprises", "includes", or "has" another component are non-exclusive and do not exclude the presence of other components.

The present disclosure is not limited to the embodiments described above, and includes modified forms of the embodiments described above or forms in which these embodiments are combined as appropriate. For example, when the output decrease amount of the internal combustion engine 2 exceeds a predetermined threshold value, the recovery measure shown in FIGS. 4 and 5 may be performed. In addition, when the above-described separation amount exceeds a predetermined threshold value, a recovery measure illustrated in FIG. 3 may be performed.

Contents described in some embodiments described above are understood as follows, for example.

1) A control device (3) of an internal combustion engine (2) according to at least one embodiment of the present disclosure is a control device (3) of an internal combustion engine (2) that is capable of performing mixed combustion operation using both liquid fuel and gaseous fuel as a fuel to be used and that includes a cylinder (4) having a combustion chamber (40) for combusting the fuel to be used, an injector (50) for injecting the liquid fuel into the combustion chamber (40), a liquid fuel introduction line (5) for guiding the liquid fuel to the injector (50), and a gaseous fuel introduction line (6) for guiding the gaseous fuel to the combustion chamber (40), the control device (3) including: a recovery measure execution unit (31) configured to perform a recovery measure for recovering an actual injection amount of the liquid fuel injected from the injector (50) in a case where, in a state where the internal combustion engine (2) is operated by the mixed combustion operation, an output decrease amount of the internal combustion engine (2) or a deviation of the actual injection amount of the liquid fuel from the injector (50) relative to an instruction injection amount exceeds a predetermined threshold value.
   According to the configuration of 1) above, in a case where the output decrease amount of the internal combustion engine (2) or the deviation of the actual injection amount of the liquid fuel in the injector (50) from the instruction injection amount exceeds the predetermined threshold value, there is a high probability that the fuel is clogged in the injector (50). In this case, the recovery measure execution unit (31) performs the recovery measure for recovering the actual injection amount of the liquid fuel injected from the injector (50), so that the fuel clogging in the injector (50) can be eliminated at an early stage. In this manner, fuel clogging in the injector (50) can be suppressed, and a decrease in the output of the internal combustion engine (2) due to the fuel clogging can be suppressed.
2) In some embodiments, in the control device (3) of an internal combustion engine (2) according to 1), the recovery measure execution unit (31) is configured to perform the recovery measure in a case where the output decrease amount of the internal combustion engine (2) exceeds the predetermined threshold value in a state where the internal combustion engine (2) is operated by the mixed combustion operation.
   According to the configuration of 2) above, the fuel clogging in the injector (50) causes a decrease in the output of the internal combustion engine (2). When the output decrease amount of the internal combustion engine (2) exceeds the predetermined threshold value, there is a high probability that fuel clogging has occurred in the injector (50). Therefore, by performing the recovery measure, the fuel clogging in the injector (50) can be eliminated at an early stage.
3) In some embodiments, in the control device (3) of an internal combustion engine (2) according to 1), the recovery measure execution unit (31) is configured to perform the recovery measure in a case where the deviation of the actual injection amount of the liquid fuel in the injector (50) from the instruction injection amount exceeds the predetermined threshold value in a state where the internal combustion engine (2) is operated by the mixed combustion operation.
   According to the configuration of 3) above, the fuel clogging in the injector (50) causes the actual injection amount of the liquid fuel in the injector (50) to deviate from the instruction injection amount. The above-described deviation is directly involved in the fuel clogging in the injector (50) as compared to a decrease in the output of the internal combustion engine (2) caused by various factors. In a case where the above-described deviation exceeds a predetermined threshold value, there is a high probability that fuel clogging has occurred in the injector (50). Therefore, by performing the recovery measure, it is possible to early eliminate the fuel clogging in the injector (50).
4) In some embodiments, in the control device (3) of an internal combustion engine (2) according to any one of 1) to 3), the recovery measure execution unit (31) increases a ratio of the liquid fuel in the fuel to be used as the recovery measure.
   According to the configuration of 4) above, the injection amount of the liquid fuel in the injector (50) can be increased by increasing the ratio of the liquid fuel in the fuel to be used. By increasing the injection amount of the liquid fuel in the injector (50), the fuel clogging in the injector (50) can be directly eliminated.
5) In some embodiments, in the control device (3) of an internal combustion engine (2) according to 4), the recovery measure execution unit (31) switches an operation mode of the internal combustion engine to a dedicated combustion operation in which the liquid fuel is used as the fuel to be used.
   According to the configuration of 5) above, the operation mode of the internal combustion engine (2) is switched to the dedicated combustion operation, so that the injection amount of the liquid fuel in the injector (50) can be increased. By increasing the injection amount of the liquid fuel in the injector (50), the fuel clogging in the injector (50) can be directly eliminated.
6) In some embodiments, in the control device (3) of an internal combustion engine (2) according to any one of 1) to 5), the recovery measure execution unit (31) increases an injection pressure, which is a pressure of the liquid fuel injected from the injector to a pressure higher than an injection pressure during a dedicated combustion operation, as the recovery measure.
   According to the configuration of 6) above, the injection pressure, which is the pressure of the liquid fuel injected from the injector (50), is increased compared to the pressure during the dedicated combustion operation. In this manner, the fuel clogging in the injector (50) can be directly eliminated.
7) In some embodiments, in the control device (3) of an internal combustion engine (2) according to any one of 1) to 6), the recovery measure execution unit (31) causes an injection pressure, which is a pressure of the liquid fuel injected from the injector, to pulsate within a predetermined pulsation limit width as the recovery measure.
   According to the configuration of 7) above, the injection pressure, which is the pressure of the liquid fuel injected from the injector (50), is pulsated within a predetermined pulsation limit width. In this manner, the fuel clogging in the injector (50) can be directly eliminated.
8) In some embodiments, in the control device (3) of an internal combustion engine (2) according to any one of 1) to 7), the recovery measure execution unit (31) includes a notification instruction unit (311) that is configured to cause a notification device (9) to perform notification to prompt switching of an operation mode of the internal combustion engine (2) to a dedicated combustion operation in which the liquid fuel is used as the fuel to be used in a case where the output decrease amount of the internal combustion engine (2) or the deviation of the actual injection amount of the liquid fuel from the injector (50) relative to the instruction injection amount exceeds the predetermined threshold value in a state where the internal combustion engine (2) is operated by the mixed combustion operation.
   According to the configuration of 8) above, the notification device (9) can perform the notification to the user of the internal combustion engine (2) to prompt switching to the dedicated combustion operation. In this way, the user of the internal combustion engine (2) can switch the operation mode of the internal combustion engine (2) to the dedicated combustion operation at a desired time. The operation mode of the internal combustion engine (2) is switched to the dedicated combustion operation, so that the injection amount of the liquid fuel in the injector (50) can be increased. By increasing the injection amount of the liquid fuel in the injector (50), the fuel clogging in the injector (50) can be directly eliminated.
9) In some embodiments, in the control device (3) of an internal combustion engine (2) according to 8), the recovery measure execution unit (31) further includes an output limiting unit (312) that is configured to limit the output of the internal combustion engine (2) to a predetermined output or less in a case where the notification by the notification device (9) is performed a predetermined number of times or more.
   According to the configuration of 9) above, the output limit unit (312) limits the output of the internal combustion engine (2) to the predetermined output or less, and thus the user of the internal combustion engine (2) can be strongly encouraged to prompt switching to the dedicated combustion operation.
10) In some embodiments, in the control device (3) of an internal combustion engine (2) according to any one of 1) to 9), the internal combustion engine (2) further includes the internal combustion engine (2) further includes a combustion gas introduction line (7) that merges with the gaseous fuel introduction line (6) at a merging portion (P1) and shares a downstream side of the merging portion (P1) with the gaseous fuel introduction line (6), the combustion gas introduction line being a combustion gas introduction line (7) for guiding a combustion gas to the combustion chamber.
   According to the configuration of 10) above, the gaseous fuel is guided to the combustion chamber (40) in a mixed gas state mixed with the combustion gas, and is combusted in the mixed gas state. In order to combust the gaseous fuel, it is necessary to relatively lower the air excess ratio and raise the temperature in the cylinder (4). When the temperature in the cylinder (4) is raised, the heat received by the injector (50) becomes excessive, and there is a concern that fuel may be clogged in the injector (50). Therefore, it is necessary to perform the recovery measure and to achieve early elimination of the fuel clogging in the injector (50).
11) In some embodiments, in the control device (3) of an internal combustion engine (2) according to any one of 1) to 10), the liquid fuel is diesel fuel, and the gaseous fuel has a methane number lower than a methane number of the diesel fuel.
   According to the configuration of 11) above, in order to suppress the emission of a greenhouse gas such as carbon dioxide from the internal combustion engine (2), the ratio of the gaseous fuel in the used fuel is increased and the ratio of the liquid fuel is decreased. As a result, the flow rate of the liquid fuel injected from the injector (50) is reduced, which may cause the fuel to clog in the injector (50). In addition, according to the configuration of 11) above, in a case where the methane number of the gaseous fuel is lower than a methane number of the liquid fuel, it is necessary to relatively lower the air excess ratio in order to combust the gaseous fuel and to raise the temperature in the cylinder. When the temperature in the cylinder is raised, the heat received by the injector (50) becomes excessive, and there is a concern that fuel may be clogged in the injector (50). Since there is a high possibility of fuel clogging in the injector (50) in this way, it is necessary to perform the recovery measure and to achieve early elimination of the fuel clogging in the injector (50).
12) In some embodiments, in the control device (3) of an internal combustion engine (2) according to any one of 1) to 10), the gaseous fuel is ammonia gas.

According to the configuration of 12) above, since the ammonia gas is a gaseous fuel having relatively low combustibility, it is necessary to use a liquid fuel as an ignition source. In addition, it is also necessary to raise the temperature in the cylinder by relatively lowering the air excess ratio in order to combust a gaseous fuel having relatively low combustibility.

### Reference Signs List

1: internal combustion engine system
2: internal combustion engine
3: control device
4: cylinder
5: liquid fuel introduction line
6: gaseous fuel introduction line
7: combustion gas introduction line
8: exhaust gas discharge line
9: notification device
10: switching device
30: control unit
31: recovery measure execution unit
40: combustion chamber
50: injector
51: common rail

## Claims

1. A control device of an internal combustion engine that is capable of performing mixed combustion operation using both liquid fuel and gaseous fuel as a fuel to be used and that includes
a cylinder having a combustion chamber for combusting the fuel to be used,
an injector for injecting the liquid fuel into the combustion chamber,
a liquid fuel introduction line for guiding the liquid fuel to the injector, and
a gaseous fuel introduction line for guiding the gaseous fuel to the combustion chamber,
the control device comprising:
a recovery measure execution unit configured to perform a recovery measure for recovering an actual injection amount of the liquid fuel injected from the injector in a case where, in a state where the internal combustion engine is operated by the mixed combustion operation, an output decrease amount of the internal combustion engine or a deviation of the actual injection amount of the liquid fuel from the injector relative to an instruction injection amount exceeds a predetermined threshold value.

2. The control device of an internal combustion engine according to Claim 1,
wherein the recovery measure execution unit is configured to perform the recovery measure in a case where the output decrease amount of the internal combustion engine exceeds the predetermined threshold value in a state where the internal combustion engine is operated by the mixed combustion operation.

3. The control device of an internal combustion engine according to Claim 1,
wherein the recovery measure execution unit is configured to perform the recovery measure in a case where the deviation of the actual injection amount of the liquid fuel in the injector from the instruction injection amount exceeds the predetermined threshold value in a state where the internal combustion engine is operated by the mixed combustion operation.

4. The control device of an internal combustion engine according to any one of Claims 1 to 3,
wherein the recovery measure execution unit increases a ratio of the liquid fuel in the fuel to be used as the recovery measure.

5. The control device of an internal combustion engine according to Claim 4,
wherein the recovery measure execution unit switches an operation mode of the internal combustion engine to a dedicated combustion operation in which the liquid fuel is used as the fuel to be used.

6. The control device of an internal combustion engine according to any one of Claims 1 to 3,
wherein the recovery measure execution unit increases an injection pressure, which is a pressure of the liquid fuel injected from the injector to a pressure higher than an injection pressure during a dedicated combustion operation, as the recovery measure.

7. The control device of an internal combustion engine according to any one of Claims 1 to 3,
wherein the recovery measure execution unit causes an injection pressure, which is a pressure of the liquid fuel injected from the injector, to pulsate within a predetermined pulsation limit width as the recovery measure.

8. The control device of an internal combustion engine according to any one of Claims 1 to 3,
wherein the recovery measure execution unit includes a notification instruction unit that is configured to cause a notification device to perform notification to prompt switching of an operation mode of the internal combustion engine to a dedicated combustion operation in which the liquid fuel is used as the fuel to be used in a case where the output decrease amount of the internal combustion engine or the deviation of the actual injection amount of the liquid fuel from the injector relative to the instruction injection amount exceeds the predetermined threshold value in a state where the internal combustion engine is operated by the mixed combustion operation.

9. The control device of an internal combustion engine according to Claim 8,
wherein the recovery measure execution unit further includes an output limiting unit that is configured to limit the output of the internal combustion engine to a predetermined output or less in a case where notification by the notification device is performed a predetermined number of times or more.

10. The control device of an internal combustion engine according to any one of Claims 1 to 3,
wherein the internal combustion engine further includes a combustion gas introduction line that merges with the gaseous fuel introduction line at a merging portion and shares a downstream side of the merging portion with the gaseous fuel introduction line, the combustion gas introduction line being a combustion gas introduction line for guiding a combustion gas to the combustion chamber.

11. The control device of an internal combustion engine according to any one of Claims 1 to 3,
wherein the liquid fuel is diesel fuel, and
the gaseous fuel has a methane number lower than a methane number of the diesel fuel.

12. The control device of an internal combustion engine according to any one of Claims 1 to 3,
wherein the gaseous fuel is ammonia gas.
